# EUROPEAN PATENT APPLICATION

(11) **EP 4 477 498 A1**
(43) Date of publication of application: **18.12.2024**
(21) Application number: 23901757.7
(22) Date of filing: 24.04.2023
(51) Int. Cl.: B62D 21/00, B62D 27/06

(54) **UNDERBODY, SKATEBOARD CHASSIS AND VEHICLE**

(71) Applicant: Contemporary Amperex Intelligence Technology (Shanghai) Limited, Shanghai 200120 (CN); Contemporary Amperex Technology Co., Limited, Ningde, Fujian 352100 (CN)
(72) Inventor: GUO, Hui, Shanghai 200120 (CN); HE, Bin, Shanghai 200120 (CN); ZHANG, Jian, Shanghai 200120 (CN); GUO, Qing, Shanghai 200120 (CN)
(74) Representative: Gong, Jinping
(86) International application number: PCT/CN2023/090220
(87) International publication number: WO 2024/221149

(57) **Abstract**

Disclosed are a lower vehicle body (6) of a vehicle, a skateboard chassis (8), and a vehicle (1). The lower vehicle body (6) includes a front compartment (61), a energy compartment frame (62), and a rear compartment (63). The energy compartment frame (62) is configured for mounting battery cells (5), and the front compartment (61) and the rear compartment (63) are connected to two ends of the energy compartment frame (62). At least one of the front compartment (61) and the rear compartment (63) is detachably connected to the energy compartment frame (62). Costs of vehicles can be reduced.

## Description

### TECHNICAL FIELD

This application relates to the field of vehicle technologies, and in particular, to a lower vehicle body, a skateboard chassis, and a vehicle.

### BACKGROUND

At present, with the rapid development of automation and intelligence, new energy vehicles are beloved and purchased by more people.

How costs are reduced is a research direction in vehicle technology.

### SUMMARY

This application provides a lower vehicle body, a skateboard chassis, and a vehicle, which can reduce the costs of vehicles.

According to a first aspect, this application provides a lower vehicle body of a vehicle, including a front compartment, a energy compartment frame, and a rear compartment, where the energy compartment frame is configured for mounting battery cells, and the front compartment and the rear compartment are connected to two ends of the energy compartment frame, where at least one of the front compartment and the rear compartment is detachably connected to the energy compartment frame.

In the foregoing technical solution, at least one of the front compartment and the rear compartment is detachably connected to the energy compartment frame. As a result, compared with a structure integrating the front compartment, the rear compartment, and the energy compartment frame, the two or three parts into which the lower vehicle body is divided can be transported and stored separately. Therefore, the flexibility in storage and transportation is increased, and storage and transportation are more convenient, thereby reducing the costs of storage and transportation.

In some embodiments, both the front compartment and the rear compartment are detachably connected to the energy compartment frame.

In the foregoing technical solution, the front compartment and the rear compartment are configured as both detachably connected to the energy compartment frame. As a result, the lower vehicle body is divided into three detachable parts. During transportation and storage, these three parts can be transported and stored separately, which is extremely convenient, further reducing the costs of storage and transportation.

In some embodiments, at least one of the front compartment and the rear compartment is detachably connected to the energy compartment frame through fasteners.

In the foregoing technical solution, the front compartment and the rear compartment are connected through fasteners. When compared with detachable connections such as snap-fit, this connection method offers higher structural strength, thereby improving the stability, reliability, and durability of the lower vehicle body.

In some embodiments, the energy compartment frame includes a floor, two first transverse beams oppositely arranged in the first direction, and two first longitudinal beams oppositely arranged in the second direction, where the first longitudinal beams connect the two first transverse beams; the floor, the two first transverse beams, and the two first longitudinal beams enclose an accommodating cavity for accommodating battery cells; and the first direction intersects with the second direction.

In the foregoing technical solution, the energy compartment frame is configured as including two first transverse beams and two first longitudinal beams, which together with the floor, define an accommodating space for accommodating battery cells. This configuration facilitates manufacturing and can create a large accommodating space.

In some embodiments, the front compartment and the rear compartment are detachably connected to two ends of the first longitudinal beam respectively.

In the foregoing technical solution, the front compartment and the rear compartment are configured as connected to the two ends of the first longitudinal beam respectively. The front compartment, the energy compartment frame, and the rear compartment are generally arranged in sequence in a longitudinal direction. Therefore, when compared with connecting to the first transverse beam, connecting to the first longitudinal beam extending along the longitudinal direction is more convenient. In addition, the first longitudinal beam generally has greater rigidity and strength, therefore, the reliability of connection to the first longitudinal beam is higher.

In some embodiments, the lower vehicle body further includes a second transverse beam, where the second transverse beam is located between the two first transverse beams, and two ends of the second transverse beam are respectively connected to the two first longitudinal beams; where the second transverse beam is configured for connecting to battery cells.

In the foregoing technical solution, the second transverse beam is connected to the battery cell, thereby limiting the position of the battery cell at the connection point. This reduces the extent of size changes caused by swelling of the battery cell during the charging and discharging process, thereby prolonging the service life of the battery cell.

In some embodiments, the front compartment includes a front anti-collision beam, a third transverse beam, and two second longitudinal beams, where the third transverse beam and the front anti-collision beam are oppositely arranged in a first direction, the two second longitudinal beams are oppositely arranged in a second direction, the second longitudinal beams are connected to the third transverse beam and the front anti-collision beam, and the second direction intersects with the first direction.

In the foregoing technical solution, the front anti-collision beam, the third transverse beam, and two second longitudinal beams are arranged, forming an approximately quadrilateral structure either on their own or in combination with another component. This structure has good support stability and facilitates the arrangement of other structures.

In some embodiments, the front compartment further includes two first torsion boxes, where the two first torsion boxes are oppositely arranged in the second direction and are connected to the two second longitudinal beams in one-to-one correspondence, the first torsion boxes are arranged on one side of the second longitudinal beams adjacent to the energy compartment frame, the third transverse beam is connected to the two first torsion boxes, and the first torsion boxes are detachably connected to the energy compartment frame.

In the foregoing technical solution, the first torsion box is arranged, and the second longitudinal beam is detachably connected to the energy compartment frame through the first torsion box, which significantly increases the structural strength of the connection between the second longitudinal beam and the energy compartment frame, thereby enhancing the structural reliability of the lower vehicle body.

In some embodiments, the energy compartment frame includes a floor, two first transverse beams oppositely arranged in the first direction, and two first longitudinal beams oppositely arranged in the second direction, where the first longitudinal beams connect the two first transverse beams; the floor, the two first transverse beams, and the two first longitudinal beams enclose an accommodating cavity for accommodating battery cells; and the two first torsion boxes are detachably connected to the two first longitudinal beams in one-to-one correspondence.

In the foregoing technical solution, the first torsion box is detachably connected to the first longitudinal beam, and the first longitudinal beam extends along the longitudinal direction. Therefore, when compared with connecting to the first transverse beam, connecting to the first longitudinal beam extending along the longitudinal direction is more convenient.

In some embodiments, the first torsion box includes a box main body and a connecting part, where the box main body is connected to the second longitudinal beam, and the connecting part includes a first wall body and a second wall body connected by bending, where the first wall body is opposite and detachably connected to the first longitudinal beam in the second direction, the second wall body is opposite and detachably connected to the first longitudinal beam in a third direction, and the first direction, the second direction, and the third direction are perpendicular to each other.

In the foregoing technical solution, the first torsion box is configured as including a first wall body and a second wall body that are bent relative to each other. The first wall body and the second wall body are both connected to the first longitudinal beam, meaning that the first torsion box is connected to the first longitudinal beam in two directions. This greatly increases the structural strength of the connection between the first torsion box and the first longitudinal beam, thereby improving the reliability of the connection.

In some embodiments, the front compartment further includes two shock towers, and the two shock towers are connected to the two second longitudinal beams in one-to-one correspondence.

In the foregoing technical solution, a shock tower is provided on the second longitudinal beam, providing lateral support for offset collisions and also support for a shock absorber.

In some embodiments, the rear compartment includes a rear anti-collision beam, a fourth transverse beam, and two third longitudinal beams, where the fourth transverse beam and the rear anti-collision beam are oppositely arranged in a first direction, the two third longitudinal beams are oppositely arranged in a second direction, the third longitudinal beams are connected to the fourth transverse beam and the rear anti-collision beam, and the second direction intersects with the first direction.

In the foregoing technical solution, a rear anti-collision beam, a fourth transverse beam, and two third longitudinal beams are arranged, forming an approximately quadrilateral structure either on their own or in combination with another component. This structure has good support stability and facilitates the arrangement of other structures.

In some embodiments, the rear compartment further includes two second torsion boxes, where the two second torsion boxes are oppositely arranged in the second direction and are connected to the two third longitudinal beams in one-to-one correspondence, the second torsion boxes are arranged on one side of the third longitudinal beams adjacent to the energy compartment frame, the fourth transverse beam is connected to the two second torsion boxes, and the second torsion boxes are detachably connected to the energy compartment frame.

In the foregoing technical solution, the second torsion box is arranged, and the third longitudinal beam is detachably connected to the energy compartment frame through the second torsion box, which significantly increases the structural strength of the connection between the third longitudinal beam and the energy compartment frame, thereby enhancing the structural reliability of the lower vehicle body.

In some embodiments, the energy compartment frame includes a floor, two first transverse beams oppositely arranged in the first direction, and two first longitudinal beams oppositely arranged in the second direction, where the first longitudinal beams connect the two first transverse beams; the floor, the two first transverse beams, and the two first longitudinal beams enclose an accommodating cavity for accommodating battery cells; and the two second torsion boxes are detachably connected to the two first longitudinal beams in one-to-one correspondence.

In the foregoing technical solution, the second torsion box is detachably connected to the first longitudinal beam, and the first longitudinal beam extends along the longitudinal direction. Therefore, when compared with the solution of connecting to the first transverse beam, connecting to the first longitudinal beam extending along the longitudinal direction is more convenient.

In some embodiments, the second torsion box includes a box body and a functional part, where the box body is connected to the third longitudinal beam, and the functional part includes a third wall body and a fourth wall body connected by bending, where the third wall body is opposite and detachably connected to the first longitudinal beam in the second direction, the fourth wall body is opposite and detachably connected to the first longitudinal beam in a third direction, and the first direction, the second direction, and the third direction are perpendicular to each other.

In the foregoing technical solution, the second torsion box is configured as including a third wall body and a fourth wall body that are bent relative to each other. The third wall body and the fourth wall body are both connected to the first longitudinal beam, meaning that the first torsion box is connected to the first longitudinal beam in two directions. This greatly increases the structural strength of the connection between the second torsion box and the first longitudinal beam 623, thereby improving the reliability of the connection.

In some embodiments, the rear compartment further includes a fifth transverse beam, and the fifth transverse beam is connected to the two box bodies and arranged at an end of the box bodies adjacent to the third longitudinal beam.

In the foregoing technical solution, the fifth transverse beam is arranged to further improve the structural stability and service durability of the rear compartment.

According to a second aspect, the embodiments of this application further provide a skateboard chassis, including the lower vehicle body according to any one of the foregoing embodiments and battery cells, where the battery cell is connected to the energy compartment frame.

According to a third aspect, the embodiments of this application further provide a vehicle, including the lower vehicle body and upper vehicle body according to any one of the foregoing embodiments, where the upper vehicle body is connected to the lower vehicle body.

In some embodiments, the upper vehicle body and the lower vehicle body are detachably connected.

The upper vehicle body and the lower vehicle body are detachably connected, which enables the separation and decoupling of the upper vehicle body and the lower vehicle body, thereby implementing independent development of the upper vehicle body and the lower vehicle body. This allows for the replacement of the upper vehicle body and the lower vehicle body according to requirements, reducing the development cycle and lowering costs.

### BRIEF DESCRIPTION OF DRAWINGS

The following describes features, advantages, and technical effects of the example embodiments of this application with reference to the accompanying drawings.
FIG. 1 is a schematic structural diagram of a vehicle according to an embodiment of this application;
FIG. 2 is a schematic exploded view of a structure of a lower vehicle body according to an embodiment of this application;
FIG. 3 is a schematic structural diagram of a energy compartment frame of a lower vehicle body according to an embodiment of this application;
FIG. 4 is a schematic exploded view of a structure of a energy compartment frame, a battery cell, and a guard plate of a lower vehicle body according to an embodiment of this application;
FIG. 5 is a schematic structural diagram of a front compartment of a lower vehicle body according to an embodiment of this application; and
FIG. 6 is a schematic structural diagram of a rear compartment of a lower vehicle body according to an embodiment of this application.

The accompanying drawings are not drawn to scale.

Reference signs in the specific embodiments are described as follows:
1. vehicle; 5. battery cell; 6. lower vehicle body;
61. front compartment; 611. front anti-collision beam; 612. third transverse beam; 613. second longitudinal beam; 614. first torsion box; 615. box main body; 616. connecting part; 617. first wall body; 618. second wall body; 619. shock tower;
62. energy compartment frame; 621. floor; 622. first transverse beam; 623. first longitudinal beam; 624. accommodating cavity; 625. second transverse beam;
63. rear compartment; 631. rear anti-collision beam; 632. fourth transverse beam; 633. third longitudinal beam; 634. second torsion box; 635. box body; 636. functional part; 637. third wall body; 638. fourth wall body; 639. fifth transverse beam;
64. fastener;
7. upper vehicle body;
8. skateboard chassis; 81. guard plate;
X. first direction; Y second direction; and Z. third direction.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all of the embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various positions in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection; and may refer to a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In the embodiments of this application, the same reference signs denote the same components. For brevity, in different embodiments, detailed descriptions of the same components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

In the related art, a lower vehicle body of a vehicle usually includes three parts: front compartment, energy compartment frame, and rear compartment, and the three parts are integrated. An integrated lower vehicle body can improve the rigidity of the vehicle, thereby improving the impact resistance of the vehicle.

However, a lower vehicle body with an integrated structure occupies a large space, so the transportation and storage costs are high.

In view of this, this application provides a technical solution, which separates at least two among the front compartment, the energy compartment frame, and the rear compartment, which originally form an integrated structure, by allowing at least one of the front compartment and the rear compartment to be detachably connected to the energy compartment frame. This facilitates transportation and storage and reduces the transportation and storage costs.

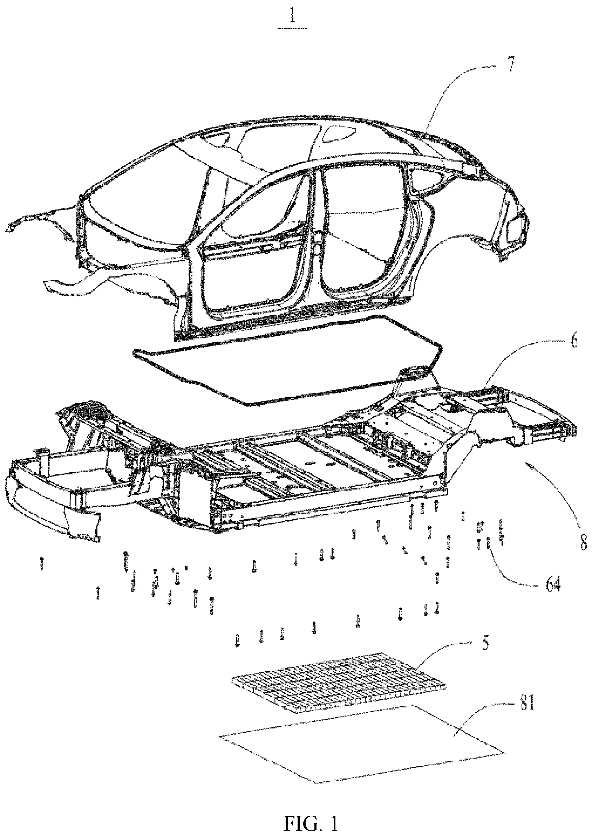

FIG. 1 is a schematic structural diagram of a vehicle according to an embodiment of this application.

As shown in FIG. 1, an embodiment of this application provides a vehicle 1, where the vehicle 1 includes a lower vehicle body 6 and an upper vehicle body 7, and the upper vehicle body 7 is connected to the lower vehicle body 6.

This embodiment of this application does not limit the method of connection between the upper vehicle body 7 and the lower vehicle body 6. For example, the two may be connected by welding or a detachable connection.

In some embodiments, the upper vehicle body 7 and the lower vehicle body 6 are detachably connected.

For example, the upper vehicle body 7 and the lower vehicle body 6 are detachably connected through a connector. The embodiments of this application do not limit the types of the connector. In some examples, the connector may include at least one of a bolt, a nut, a stud, a screw, and a pin. In other examples, the connector may further include a snap.

In the embodiments of this application, the upper vehicle body 7 and the lower vehicle body 6 are detachably connected, which enables the separation and decoupling of the upper vehicle body 7 and the lower vehicle body 6, thereby implementing independent development of the upper vehicle body 7 and the lower vehicle body 6. This allows for the replacement of the upper vehicle body 7 and the lower vehicle body 6 according to requirements, reducing the development cycle and lowering costs.

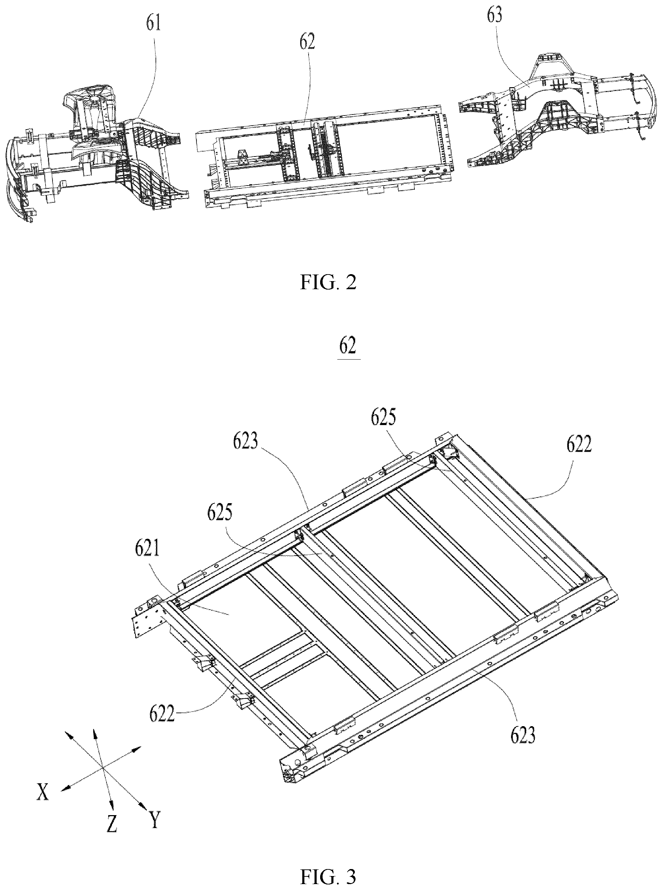

FIG. 2 is a schematic exploded view of a structure of a lower vehicle body according to an embodiment of this application.

As shown in FIG. 2, the lower vehicle body 6 of a vehicle 1 of this embodiment of this application includes a front compartment 61, a energy compartment frame 62, and a rear compartment 63, where the energy compartment frame 62 is configured for mounting battery cells 5, and the front compartment 61 and the rear compartment 63 are connected to two ends of the energy compartment frame 62, where at least one of the front compartment 61 and the rear compartment 63 is detachably connected to the energy compartment frame 62.

This embodiment of this application does not limit the specific methods of detachable connection between the front compartment 61 and the energy compartment frame 62, as well as between the rear compartment 63 and the energy compartment frame 62. For example, the detachable connection may be realized by snapping, threaded connection, riveting, and the like.

At least one of the front compartment 61 and the rear compartment 63 is detachably connected to the energy compartment frame 62. As a result, compared with a structure integrating the front compartment 61, the rear compartment 63, and the energy compartment frame 62, the two or three parts into which the lower vehicle body 6 is divided can be transported and stored separately. Therefore, the flexibility in storage and transportation is increased, and storage and transportation are more convenient, thereby reducing the costs of storage and transportation. In addition, the front compartment 61, the energy compartment frame 62, and the rear compartment 63 are detachably connected, enabling separation and connection of the front compartment 61, the energy compartment frame 62, and the rear compartment 63. Thus, the independent development of the three can be implemented, which allows the front compartment 61, the energy compartment frame 62, and the rear compartment 63 to be replaced as needed, shortening the development cycle and reducing the costs.

In some embodiments, both the front compartment 61 and the rear compartment 63 are detachably connected to the energy compartment frame 62.

The front compartment 61 and the rear compartment 63 are configured as both detachably connected to the energy compartment frame 62. As a result, the lower vehicle body 6 is divided into three detachable parts. During transportation and storage, these three parts can be transported and stored separately, which is extremely convenient, further reducing the costs of storage and transportation.

In some embodiments, at least one of the front compartment 61 and the rear compartment 63 is detachably connected to the energy compartment frame 62 through fasteners 64.

The embodiments of this application do not limit the specific types of the fasteners 64. For example, the fastener 64 may be a bolt and nut assembly, or a connector such as a rivet.

The front compartment 61 and the rear compartment 63 are connected through fasteners 64. When compared with detachable connections such as snap-fit, this connection method offers higher structural strength, thereby improving the stability, reliability, and durability of the lower vehicle body 6.

In some embodiments, the fastener 64 includes a bolt.

For example, there are a plurality of connectors, and at least part of the connectors are bolts.

Bolts are highly standardized and easy to replace. Bolt connections are easy to disassemble and assemble, which is conducive to improving assembly efficiency.

Compared with connection methods such as flow drill screwing (FDS) and self-pierce riveting (SPR), connections using bolts allow for the decoupling of physical structures of the front compartment 61, the energy compartment frame 62, and the rear compartment 63.

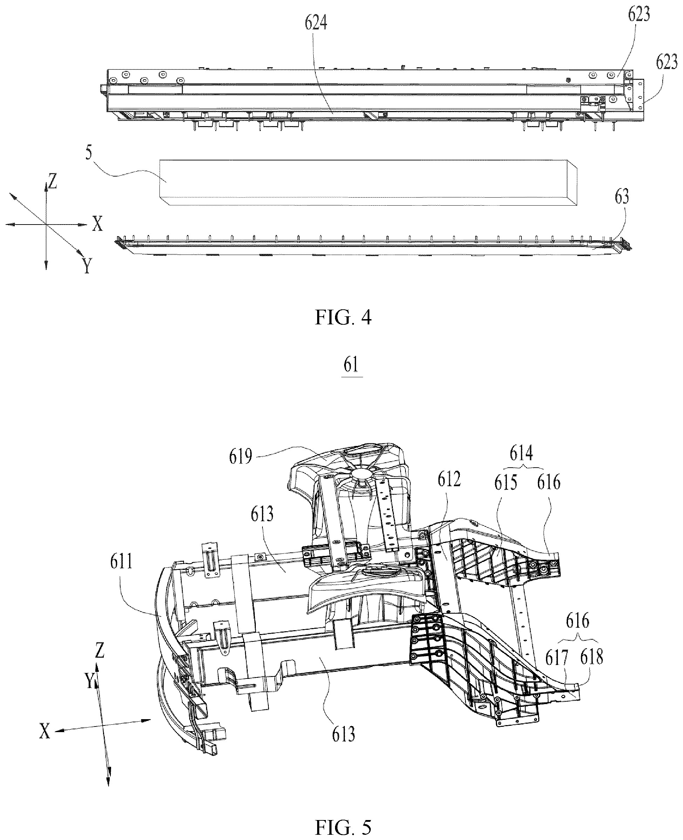

FIG. 3 is a schematic structural diagram of a energy compartment frame of a lower vehicle body according to an embodiment of this application; and FIG. 4 is a schematic exploded view of a structure of a energy compartment frame, a battery cell, and a guard plate of a lower vehicle body according to an embodiment of this application.

As shown in FIGs. 3 and 4, in some embodiments, the energy compartment frame 62 includes a floor 621, two first transverse beams 622 oppositely arranged in the first direction X, and two first longitudinal beams 623 oppositely arranged in the second direction Y, where the first longitudinal beams 623 connect the two first transverse beams 622; the floor 621, the two first transverse beams 622, and the two first longitudinal beams 623 enclose an accommodating cavity 624 for accommodating battery cells 5; and the first direction X intersects with the second direction Y

The floor 621 in the embodiments of this application may be used as the floor 621 of the vehicle 1. Optionally, the floor 621 is configured for connecting to the battery cells 5. Further optionally, the battery cell 5 is bonded to the floor 621.

For example, the two first transverse beams 622 and the two first longitudinal beams 623 in the embodiments of this application may be alternately arranged and connected end to end, and the first longitudinal beam 623 may also exceed the first transverse beam 622 along its length direction, and the first transverse beam 622 may also exceed the first longitudinal beam 623 along its length direction.

The embodiments of this application do not limit whether the structures of the two first transverse beams 622 are the same, and the structures of the two first transverse beams 622 may be the same or different. The same is true for the first longitudinal beam 623, which will not be repeated here in this application.

Optionally, the first direction X is perpendicular to the second direction Y

The energy compartment frame 62 is configured as including two first transverse beams 622 and two first longitudinal beams 623, which together with the floor 621, define an accommodating space for accommodating battery cells 5. This configuration facilitates manufacturing and can create a large accommodating space.

In some optional embodiments, the two first transverse beams 622 and two first longitudinal beams 623 are connected by welding.

In some optional embodiments, a sealing member is provided between, at least one of the two first transverse beams 622 and the two first longitudinal beams 623, and the floor 621.

The sealing member is at least one of a sealing foam or a sealing adhesive.

In some optional embodiments, the two first transverse beams 622 and two first longitudinal beams 623 are both connected to the floor 621 through connectors.

For example, the connector is a bolt or a rivet.

In some embodiments, the front compartment 61 and the rear compartment 63 are detachably connected to two ends of the first longitudinal beam 623 respectively.

In the embodiments of this application, the front compartment 61 is detachably connected to two ends at a same side of the two first longitudinal beams 623, and the rear compartment 63 is detachably connected to another two ends at a same side of the two first longitudinal beams 623.

Optionally, the front compartment 61, the energy compartment frame, and the rear compartment 63 are arranged in the first direction X in sequence.

The front compartment 61 and the rear compartment 63 are respectively connected to the two ends of the first longitudinal beam 623. The front compartment 61, the energy compartment frame, and the rear compartment 63 are generally arranged in sequence in a longitudinal direction. Therefore, when compared with connecting to the first transverse beam 622, connecting to the first longitudinal beam 623 extending along the longitudinal direction is more convenient. In addition, the first longitudinal beam 623 generally has greater rigidity and strength, therefore, the reliability of connection to the first longitudinal beam 623 is higher.

In some embodiments, the lower vehicle body 6 further includes a second transverse beam 625, where the second transverse beam 625 is located between the two first transverse beams 622, and two ends of the second transverse beam 625 are respectively connected to the two first longitudinal beams 623; where the second transverse beam 625 is configured for connecting to battery cells 5.

The second transverse beam 625 in the embodiments of this application is located in the accommodating cavity 624.

Optionally, the second transverse beam 625 is parallel to the first transverse beam 622.

Optionally, the second transverse beam 625 is provided in plurality, and the plurality of second transverse beams 625 are arranged at intervals along the first direction X, with at least part of the plurality of battery cells 5 being clamped between two adjacent second transverse beams 625.

The embodiments of this application do not limit the method of connection between the battery cell 5 and the second transverse beam 625. For example, the battery cell 5 is bonded to the second transverse beam 625.

The embodiments of this application do not limit the method of connection between the second transverse beam 625 and the first longitudinal beam 623. For example, the two may be connected by threaded connection or welding.

The second transverse beam 625 is connected to the battery cell 5, thereby limiting the position of the battery cell 5 at the connection point. This reduces the extent of size changes caused by swelling of the battery cell 5 during the charging and discharging process, thereby prolonging the service life of the battery cell 5.

Optionally, the second transverse beam 625 is connected to a lateral side of the battery cell 5. The second transverse beam 625 being connected to a lateral side of the battery cell 5 makes the effect of size restriction more evident.

FIG. 5 is a schematic structural diagram of a front compartment of a lower vehicle body according to an embodiment of this application.

As shown in FIG. 5, in some embodiments, the front compartment 61 includes a front anti-collision beam 611, a third transverse beam 612, and two second longitudinal beams 613, where the third transverse beam 612 and the front anti-collision beam 611 are oppositely arranged in a first direction X, the two second longitudinal beams 613 are oppositely arranged in a second direction Y, the second longitudinal beams 613 are connected to the third transverse beam 612 and the front anti-collision beam 611, and the second direction Y intersects with the first direction X.

The embodiments of this application do not limit the method of connection between the second longitudinal beam 613 and the third transverse beam 612, and between the second longitudinal beam 613 and the front anti-collision beam 611. For example, the second longitudinal beam 613 may be connected to the third transverse beam 612 through integral molding, welding, threaded connection, rivet connection, bonding, or FDS. The same is true for the second longitudinal beam 613 and the front anti-collision beam 611, which will not be repeated here in this application.

Optionally, the first direction X is perpendicular to the second direction Y

The front anti-collision beam 611, the third transverse beam 612, and two second longitudinal beams 613 are arranged, forming an approximately quadrilateral structure either on their own or in combination with another component. This structure has good support stability and facilitates the arrangement of other structures.

In some embodiments, the front compartment 61 further includes two first torsion boxes 614, where the two first torsion boxes 614 are oppositely arranged in the second direction Y and are connected to the two second longitudinal beams 613 in one-to-one correspondence, the first torsion boxes 614 are arranged on one side of the second longitudinal beams 613 adjacent to the energy compartment frame 62, the third transverse beam 612 is connected to the two first torsion boxes 614, and the first torsion boxes 614 are detachably connected to the energy compartment frame 62.

The embodiments of this application do not limit the method of connection between the first torsion box 614 and the second longitudinal beam 613. For example, the first torsion box 614 is connected to both the second longitudinal beam 613 and the third transverse beam 612 by a method of combination of threaded connection and bonding. Alternatively, a method of combination of riveting and bonding may be used, or riveting can be used alone.

The first torsion box 614 is arranged, and the second longitudinal beam 613 is detachably connected to the energy compartment frame 62 through the first torsion box 614, which significantly increases the structural strength of the connection between the second longitudinal beam 613 and the energy compartment frame 62, thereby enhancing the structural reliability of the lower vehicle body 6.

In some embodiments, the energy compartment frame 62 includes a floor 621, two first transverse beams 622 oppositely arranged in the first direction X, and two first longitudinal beams 623 oppositely arranged in the second direction Y, where the first longitudinal beams 623 connect the two first transverse beams 622; the floor 621, the two first transverse beams 622, and the two first longitudinal beams 623 enclose an accommodating cavity 624 for accommodating battery cells 5; and the two first torsion boxes 614 are detachably connected to the two first longitudinal beams 623 in one-to-one correspondence.

The embodiments of this application do not limit the method of connection between the first torsion box 614 and the first longitudinal beam 623. For example, the first torsion box 614 and the first longitudinal beam 623 may be connected through threaded connection or riveting.

The first torsion box 614 is detachably connected to the first longitudinal beam 623, and the first longitudinal beam 623 extends along the longitudinal direction. Therefore, when compared with connecting to the first transverse beam 622, connecting to the first longitudinal beam 623 extending along the longitudinal direction is more convenient.

In some embodiments, the first torsion box 614 includes a box main body 615 and a connecting part 616, where the box main body 615 is connected to the second longitudinal beam 613, and the connecting part 616 includes a first wall body 617 and a second wall body 618 connected by bending, where the first wall body 617 is opposite and detachably connected to the first longitudinal beam 623 in the second direction Y, the second wall body 618 is opposite and detachably connected to the first longitudinal beam 623 in a third direction Z, and the first direction X, the second direction Y, and the third direction Z are perpendicular to each other.

The first wall body 617 and the first longitudinal beam 623 in the embodiments of this application may be directly attached and then connected through fasteners 64 such as bolts. Alternatively, the first wall body 617 and the first longitudinal beam 623 may be connected after another cushion member is sandwiched therebetween. The same is true for the second wall body 618 and the first longitudinal beam 623, which will not be repeated here in this application.

The first wall body 617 in the embodiments of this application is perpendicular to the second direction Y, and the second wall body 618 is perpendicular to the third direction Z.

The first torsion box 614 is configured as including a first wall body 617 and a second wall body 618 that are bent relative to each other. The first wall body 617 and the second wall body 618 are both connected to the first longitudinal beam 623, meaning that the first torsion box 614 is connected to the first longitudinal beam 623 in two directions. This greatly increases the structural strength of the connection between the first torsion box 614 and the first longitudinal beam 623, thereby improving the reliability of the connection.

In some embodiments, the front compartment 61 further includes two shock towers 619, and the two shock towers 619 are connected to the two second longitudinal beams 613 in one-to-one correspondence.

A shock tower 619 is provided on the second longitudinal beam 613, providing lateral support for offset collisions and also support for a shock absorber.

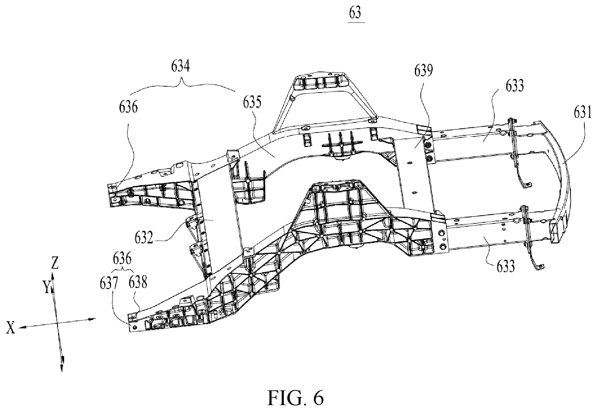

FIG. 6 is a schematic structural diagram of a rear compartment of a lower vehicle body according to an embodiment of this application;

As shown in FIG. 6, in some embodiments, the rear compartment 63 includes a rear anti-collision beam 631, a fourth transverse beam 632, and two third longitudinal beams 633, where the fourth transverse beam 632 and the rear anti-collision beam 631 are oppositely arranged in a first direction X, the two third longitudinal beams 633 are oppositely arranged in a second direction Y, the third longitudinal beams 633 are connected to the fourth transverse beam 632 and the rear anti-collision beam 631, and the second direction Y intersects with the first direction X.

The embodiments of this application do not limit the method of connection between the third longitudinal beam 633 and the fourth transverse beam 632, and between the third longitudinal beam 633 and the rear anti-collision beam 631. For example, the third longitudinal beam 633 may be connected to the fourth transverse beam 632 through integral molding, welding, threaded connection, rivet connection, or FDS. Further, after a foregoing connection method is used, a structural adhesive may be used for further connection. The same is true for the third longitudinal beam 633 and the front anti-collision beam 611, which will not be repeated here in this application.

Optionally, the first direction X is perpendicular to the second direction Y

The rear anti-collision beam 631, the fourth transverse beam 632, and two third longitudinal beams 633 are arranged, forming an approximately quadrilateral structure either on their own or in combination with another component. This structure has good support stability and facilitates the arrangement of other structures.

In some embodiments, the rear compartment 63 further includes two second torsion boxes 634, where the two second torsion boxes 634 are oppositely arranged in the second direction Y and are connected to the two third longitudinal beams 633 in one-to-one correspondence, the second torsion boxes 634 are arranged on one side of the third longitudinal beams 633 adjacent to the energy compartment frame 62, the fourth transverse beam 632 is connected to the two second torsion boxes 634, and the second torsion boxes 634 are detachably connected to the energy compartment frame 62.

The embodiments of this application do not limit the method of connection between the second torsion box 634 and the third longitudinal beam 633. For example, the second torsion box 634 is connected to the third longitudinal beam 633 or the fourth transverse beam 632 by a method of combination of threaded connection and bonding. Alternatively, a method of combination of riveting and bonding may be used, or riveting can be used alone.

The second torsion box 634 is arranged, and the third longitudinal beam 633 is detachably connected to the energy compartment frame 62 through the second torsion box 634, which significantly increases the structural strength of the connection between the third longitudinal beam 633 and the energy compartment frame 62, thereby enhancing the structural reliability of the lower vehicle body 6.

In some embodiments, the energy compartment frame 62 includes a floor 621, two first transverse beams 622 oppositely arranged in the first direction X, and two first longitudinal beams 623 oppositely arranged in the second direction Y, where the first longitudinal beams 623 connect the two first transverse beams 622; the floor 621, the two first transverse beams 622, and the two first longitudinal beams 623 enclose an accommodating cavity 624 for accommodating battery cells 5; and the two second torsion boxes 634 are detachably connected to the two first longitudinal beams 623 in one-to-one correspondence.

The embodiments of this application do not limit the method of connection between the second torsion box 634 and the first longitudinal beam 623. For example, the second torsion box 634 and the first longitudinal beam 623 may be connected through threaded connection or riveting.

The second torsion box 634 is detachably connected to the first longitudinal beam 623, and the first longitudinal beam 623 extends along the longitudinal direction. Therefore, when compared with the solution of connecting to the first transverse beam 622, connecting to the first longitudinal beam 623 extending along the longitudinal direction is more convenient.

In some embodiments, the second torsion box 634 includes a box body 635 and a functional part 636, where the box body 635 is connected to the third longitudinal beam 633, and the functional part 636 includes a third wall body 637 and a fourth wall body 638 that are bent and connected, where the third wall body 637 is opposite and detachably connected to the first longitudinal beam 623 in the second direction Y, the fourth wall body 638 is opposite and detachably connected to the first longitudinal beam 623 in a third direction Z, and the first direction X, the second direction Y, and the third direction Z are perpendicular to each other.

For example, the third wall body 637 and the first longitudinal beam 623 in the embodiments of this application may be directly attached and then connected through fasteners 64 such as bolts; alternatively, the third wall body 637 and the first longitudinal beam 623 may be connected after another cushion member is sandwiched therebetween. The same is true for the fourth wall body 638 and the first longitudinal beam 623, which will not be repeated here in this application.

The third wall body 637 in the embodiments of this application is perpendicular to the second direction Y, and the fourth wall body 638 is perpendicular to the third direction Z.

The second torsion box 634 is configured as including a third wall body 637 and a fourth wall body 638 that are bent relative to each other. The third wall body 637 and the fourth wall body 638 are both connected to the first longitudinal beam 623, meaning that the first torsion box 614 is connected to the first longitudinal beam 623 in two directions. This greatly increases the structural strength of the connection between the second torsion box 634 and the first longitudinal beam 623, thereby improving the reliability of the connection.

In some embodiments, the rear compartment 63 further includes a fifth transverse beam 639, and the fifth transverse beam 639 is connected to the two box bodies 635 and arranged at an end of the box bodies 635 adjacent to the third longitudinal beam 633.

For example, the fifth transverse beam 639 may be connected to the box body 635 by a method of threaded connection, riveting, or a combination of threaded connection and bonding.

The fifth transverse beam 639 is arranged to further improve the structural stability and service durability of the rear compartment 63.

The embodiments of this application further provide a skateboard chassis 8, including the lower vehicle body 6 and battery cells 5, where the battery cells 5 are connected to the energy compartment frame 62.

Optionally, the battery cells 5 are connected to the floor 621 of the energy compartment frame 62.

In some embodiments, the skateboard chassis 8 further includes a guard plate 81, where the guard plate 81 is connected to the first transverse beam 622 and the first longitudinal beam 623 and covers an opening of the accommodating cavity 624.

For example, the guard plate 81 is connected to the first transverse beam 622 and the first longitudinal beam 623 by a method of combination of threaded connection and using a sealing member. Optionally, the sealing member is foam.

Refer to FIG. 1 and FIG. 2. The embodiments of this application provide a lower vehicle body 6, where the lower vehicle body 6 of a vehicle 6 of the embodiments of this application includes a front compartment 61, a energy compartment frame 62, and a rear compartment 63, where the energy compartment frame 62 is configured for mounting battery cells 5, and the front compartment 61 and the rear compartment 63 are connected to two ends of the energy compartment frame 62, where both the front compartment 61 and the rear compartment 63 are detachably connected to the energy compartment frame 62.

Although this application has been described with reference to the preferred embodiments, various modifications can be made to this application without departing from the scope of this application and the components therein can be replaced with equivalents. In particular, as long as there is no structural conflict, the various technical features mentioned in some embodiments can be combined in any manner. This application is not limited to the specific embodiments disclosed in this specification but includes all technical solutions falling within the scope of the claims.

## Claims

1. A lower vehicle body of a vehicle, comprising a front compartment, a energy compartment frame, and a rear compartment, wherein the energy compartment frame is configured for mounting battery cells, and the front compartment and the rear compartment are connected to two ends of the energy compartment frame, wherein at least one of the front compartment and the rear compartment is detachably connected to the energy compartment frame.

2. The lower vehicle body according to claim 1, wherein the front compartment and the rear compartment are both detachably connected to the energy compartment frame.

3. The lower vehicle body according to claim 1 or 2, wherein at least one of the front compartment and the rear compartment is detachably connected to the energy compartment frame via fasteners.

4. The lower vehicle body according to any one of claims 1 to 3, wherein the energy compartment frame comprises a floor, two first transverse beams oppositely arranged in a first direction, and two first longitudinal beams oppositely arranged in a second direction, wherein the first longitudinal beams connect the two first transverse beams; and
the floor, the two first transverse beams, and the two first longitudinal beams enclose an accommodating cavity for accommodating the battery cells, and the first direction intersects with the second direction.

5. The lower vehicle body according to claim 4, wherein the front compartment and the rear compartment are respectively detachably connected to two ends of the first longitudinal beam.

6. The lower vehicle body according to claim 4, further comprising a second transverse beam, wherein the second transverse beam is located between the two first transverse beams, and two ends of the second transverse beam are respectively connected to the two first longitudinal beams; wherein
the second transverse beam is configured for connecting to the battery cells.

7. The lower vehicle body according to any one of claims 1 to 6, wherein the front compartment comprises a front anti-collision beam, a third transverse beam, and two second longitudinal beams, wherein the third transverse beam and the front anti-collision beam are oppositely arranged in a first direction, the two second longitudinal beams are oppositely arranged in a second direction, the second longitudinal beams are connected to the third transverse beam and the front anti-collision beam, and the second direction intersects with the first direction.

8. The lower vehicle body according to claim 7, wherein the front compartment further comprises two first torsion boxes, wherein the two first torsion boxes are oppositely arranged in the second direction and are connected to the two second longitudinal beams in one-to-one correspondence, the first torsion boxes are arranged on one side of the second longitudinal beams adjacent to the energy compartment frame, and the third transverse beam is connected to the two first torsion boxes, and
the first torsion box is detachably connected to the energy compartment frame.

9. The lower vehicle body according to claim 8, wherein the energy compartment frame comprises a floor, two first transverse beams oppositely arranged in the first direction, and two first longitudinal beams oppositely arranged in the second direction, wherein the first longitudinal beams connect the two first transverse beams, and the floor, the two first transverse beams, and the two first longitudinal beams enclose an accommodating cavity for accommodating battery cells; and
the two first torsion boxes are detachably connected to the two first longitudinal beams in one-to-one correspondence.

10. The lower vehicle body according to claim 9, wherein the first torsion box comprises a box main body and a connecting part, wherein the box main body is connected to the second longitudinal beam, and the connecting part comprises a first wall body and a second wall body connected by bending, wherein the first wall body is opposite and detachably connected to the first longitudinal beam in the second direction, the second wall body is opposite and detachably connected to the first longitudinal beam in a third direction, and the first direction, the second direction, and the third direction are perpendicular to each other.

11. The lower vehicle body according to claim 7, wherein the front compartment further comprises two shock towers, and the two shock towers are connected to the two second longitudinal beams in one-to-one correspondence.

12. The lower vehicle body according to any one of claims 1 to 11, wherein the rear compartment comprises a rear anti-collision beam, a fourth transverse beam, and two third longitudinal beams, wherein the fourth transverse beam and the rear anti-collision beam are oppositely arranged in a first direction, the two third longitudinal beams are oppositely arranged in a second direction, the third longitudinal beams are connected to the fourth transverse beam and the rear anti-collision beam, and the second direction intersects with the first direction.

13. The lower vehicle body according to claim 12, wherein the rear compartment further comprises two second torsion boxes, wherein the two second torsion boxes are oppositely arranged in the second direction and are connected to the two third longitudinal beams in one-to-one correspondence, the second torsion boxes are arranged on one side of the third longitudinal beams adjacent to the energy compartment frame, and the fourth transverse beam is connected to the two second torsion boxes, and
the second torsion box is detachably connected to the energy compartment frame.

14. The lower vehicle body according to claim 13, wherein the energy compartment frame comprises a floor, two first transverse beams oppositely arranged in the first direction, and two first longitudinal beams oppositely arranged in the second direction, wherein the first longitudinal beams connect the two first transverse beams, and the floor, the two first transverse beams, and the two first longitudinal beams enclose an accommodating cavity for accommodating the battery cells; and
the two second torsion boxes are detachably connected to the two first longitudinal beams in one-to-one correspondence.

15. The lower vehicle body according to claim 14, wherein the second torsion box comprises a box body and a functional part, wherein the box body is connected to the third longitudinal beam, and the functional part comprises a third wall body and a fourth wall body connected by bending, wherein the third wall body is opposite and detachably connected to the first longitudinal beam in the second direction, the fourth wall body is opposite and detachably connected to the first longitudinal beam in a third direction, and the first direction, the second direction, and the third direction are perpendicular to each other.

16. The lower vehicle body according to claim 15, wherein the rear compartment further comprises a fifth transverse beam, and the fifth transverse beam is connected to the two box bodies and arranged at an end of the box bodies adjacent to the third longitudinal beam.

17. A skateboard chassis, comprising:
the lower vehicle body according to any one of claims 1 to 16; and
battery cells connected to the energy compartment frame.

18. A vehicle, comprising:
the lower vehicle body according to any one of claims 1 to 16; and
an upper vehicle body connected to the lower vehicle body.

19. The vehicle according to claim 18, wherein the upper vehicle body and the lower vehicle body are detachably connected.
